# EUROPEAN PATENT APPLICATION

(11) **EP 4 623 748 A1**
(43) Date of publication of application: **01.10.2025**
(21) Application number: 23911967.0
(22) Date of filing: 22.12.2023
(51) Int. Cl.: A44C 27/00, A44C 3/00

(54) **CAN PRODUCT FABRICATING DEVICE**

(30) Priority: 27.12.2022 JP 2022209479
(71) Applicant: BROTHER KOGYO KABUSHIKI KAISHA, Nagoya-shi, Aichi 467-8561 (JP)
(72) Inventor: KOGA, Yuji, Nagoya-shi, Aichi 467-8562 (JP); TAKEUCHI, Kenji, Nagoya-shi, Aichi 467-8562 (JP); TSUJISHITA, Yoji, Nagoya-shi, Aichi 467-8562 (JP)
(74) Representative: Prüfer & Partner mbB Patentanwälte · Rechtsanwälte
(86) International application number: PCT/JP2023/046111
(87) International publication number: WO 2024/143187

(57) **Abstract**

Provided is a button product fabricating device that has a reduced installation footprint and that is made more compact. This button product fabricating device for fabricating a button product by connecting a front member and a rear member comprises a printing unit for printing onto a printing target medium, a die unit for connecting the front member and the rear member, and a conveying unit for conveying the printing target medium above the front member in a conveying direction from the printing unit toward the die unit, wherein the die unit is disposed above the printing unit.

## Description

### TECHNICAL FIELD

The present invention relates to a button product manufacturing device.

### BACKGROUND

In the related art, a device for manufacturing a button product such as a button badge to which a predetermined image is applied is known, and Patent Literature 1 discloses a button product manufacturing device that manufactures a button badge by caulking a front lid to a back lid.

### Citation List

### Patent Literature

Patent Literature 1: JP2019-136210A

### SUMMARY

### Technical Problem

However, in view of arrangement of a printing device and a mold device in the above-described button product manufacturing device in the related art, there is room for compacting the button product manufacturing device by reducing an installation area thereof.

Therefore, an object of the present invention is to provide a compact button product manufacturing device with a reduced installation area.

### Solution to Problem

A button product manufacturing device according to the present invention is a button product manufacturing device that manufactures a button product by connecting a front member and a back member, the device including: a printing unit configured to perform printing on a printing medium; a die unit configured to connect the front member and the back member; and a conveying unit configured to convey the printing medium on the front member or above the front member in a conveying direction from the printing unit toward the die unit, in which the die unit is disposed on or above the printing unit.

According to the present invention, the die unit is disposed on or above the printing unit, so that the installation area of the button product manufacturing device can be reduced as compared with a case where the die unit and the printing unit are disposed side by side. Accordingly, the button product manufacturing device can be compacted in a planar direction.

### Advantageous Effects Of Invention

According to the present invention, it is possible to provide a button product manufacturing device, a button product manufacturing method, and a button product manufacturing program capable of manufacturing a button product with high accuracy.

### BRIEF DESCRIPTION OF THE DRAWINGS

FIG. 1 is a perspective view illustrating a button product manufacturing device according to the present embodiment.
FIG. 2 is a plan view of the button product manufacturing device in FIG. 1.
FIG. 3 is a block diagram illustrating a configuration of a control system of the button product manufacturing device in FIG. 1.
FIG. 4A is a perspective view of a front member.
FIG. 4B is a perspective view of a back member as viewed from a front side.
FIG. 4C is a perspective view of the back member as viewed from a back side.
FIG. 5A is a plan view illustrating a printing medium.
FIG. 5B is a plan view illustrating a white film.
FIG. 6 is a perspective view illustrating a conveying unit.
FIG. 7 is a perspective view illustrating a discharge unit connected to the conveying unit in FIG. 6.
FIG. 8A is a perspective view illustrating the discharge unit in FIG. 7.
FIG. 8B is a perspective view of the discharge unit in FIG. 7 as viewed from a direction different from that of FIG. 8A.
FIG. 9A is a sectional view illustrating the discharge unit connected to the conveying unit in FIG. 6.
FIG. 9B is an enlarged sectional view of a region in FIG. 9A.
FIG. 10A is a perspective view illustrating a base plate of the die unit.
FIG. 10B is a partially enlarged plan view of the base plate in FIG. 10A.
FIG. 11 is a perspective view illustrating the conveying unit detached from the die unit.
FIG. 12 is a perspective view illustrating a state where a cover of the printing unit is at an open position.
FIG. 13 is a perspective view of the cover in FIG. 12 at the open position as viewed from a direction different from that of FIG. 12.
FIG. 14 is a perspective view of a die unit.
FIG. 15 is a sectional view of a button product manufactured by caulking the front member and the back member.

### DETAILED DESCRIPTION

Hereinafter, a button product manufacturing device according to an embodiment of the present invention will be described with reference to the drawings. The button product manufacturing device to be described below is merely an embodiment of the present invention. Accordingly, the present invention is not limited to the following embodiment, and can be added, deleted, or modified without departing from the scope of the present invention.

### (Overall Configuration of Button product Manufacturing Device)

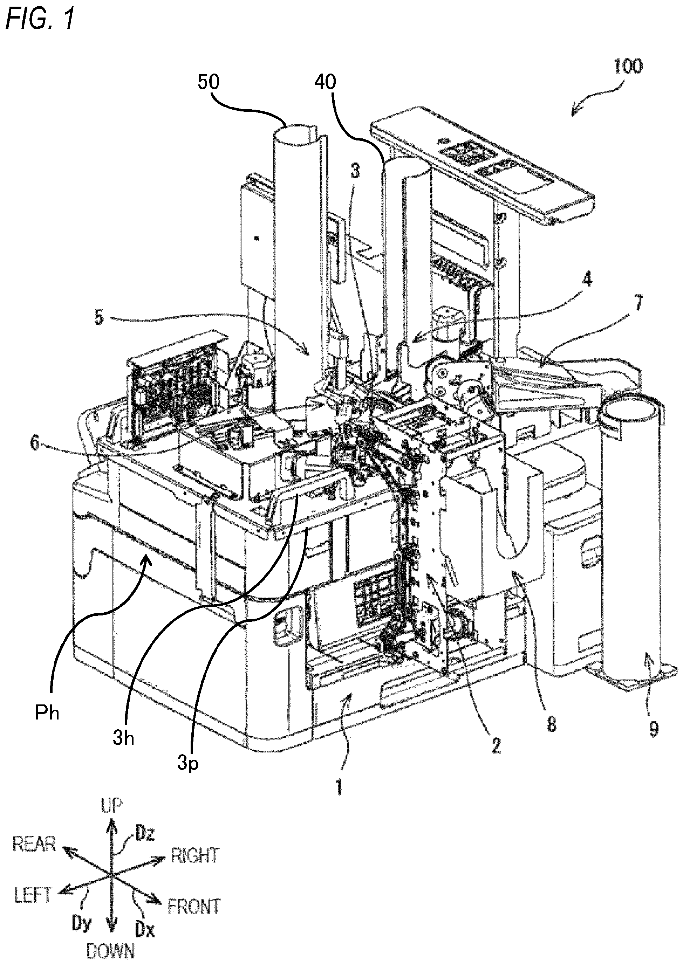

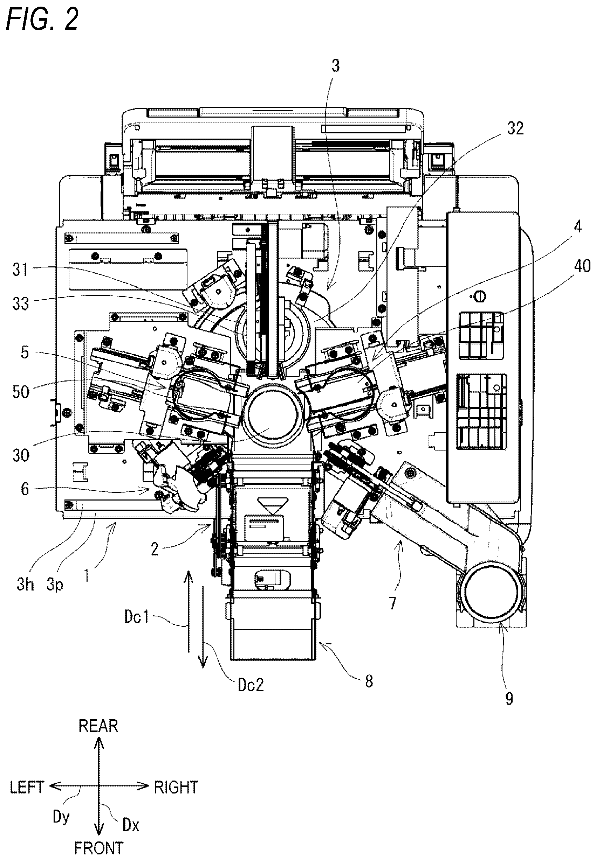

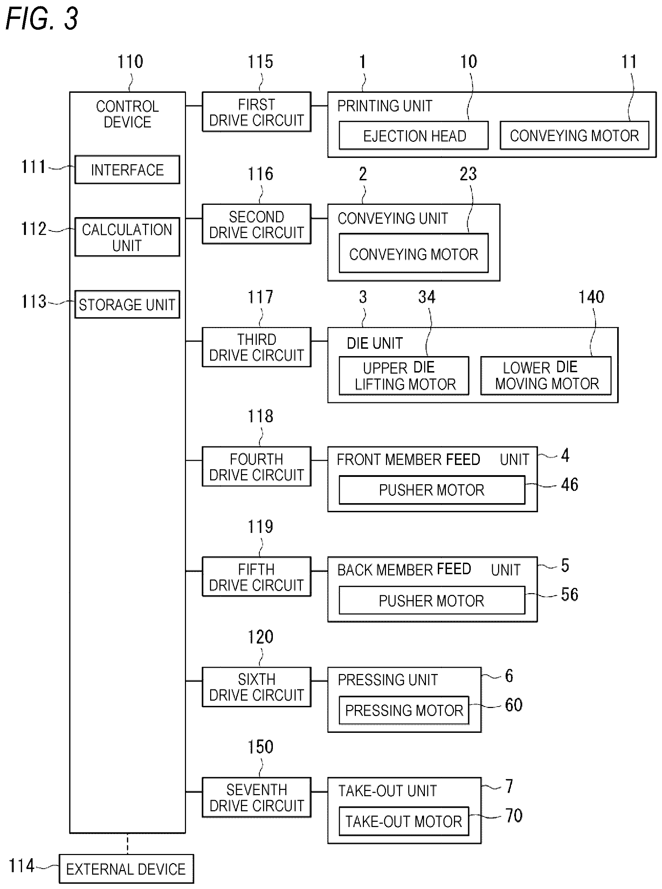

FIG. 1 is a perspective view illustrating a button product manufacturing device 100 according to an embodiment of the present invention. FIG. 2 is a plan view of the button product manufacturing device 100 in FIG. 1. FIG. 3 is a block diagram illustrating a configuration of a control system of the button product manufacturing device 100 in FIG. 1.

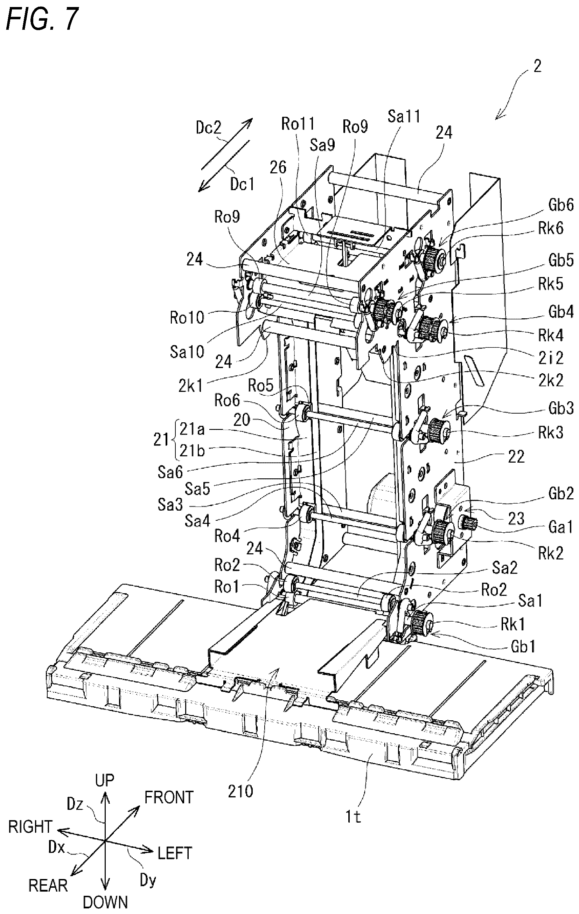

The button product manufacturing device 100 is a device that manufactures a button product by connecting a front member and a back member as button members. Specifically, the button product manufacturing device 100 manufactures a can product by caulking a front member and a back member. The button product manufacturing device 100 includes a printing unit 1, a conveying unit 2, a die unit 3, a front member feed unit 4, a back member feed unit 5, a pressing unit 6, a take-out unit 7, a collection box 8, a button product container 9, and a discharge unit 210 (FIG. 7), as illustrated in FIGS. 1 and 2. In FIGS. 1 and 2, directions orthogonal to one another are referred to as a first direction Dx, a second direction Dy, and a third direction Dz. In the present embodiment, for example, the first direction Dx is a front-rear direction of the button product manufacturing device 100, the second direction Dy is a left-right direction of the button product manufacturing device 100, and the third direction Dz is an up-down direction. In this case, a front side of the printing unit 1 is referred to as a front side, a rear side thereof is referred to as a rear side, and left and right sides thereof as viewed from the front are referred to as a left side and a right side. In the following description, Dx is referred to as the front-rear direction, Dy is referred to as the left-right direction, and Dz is referred to as the up-down direction.

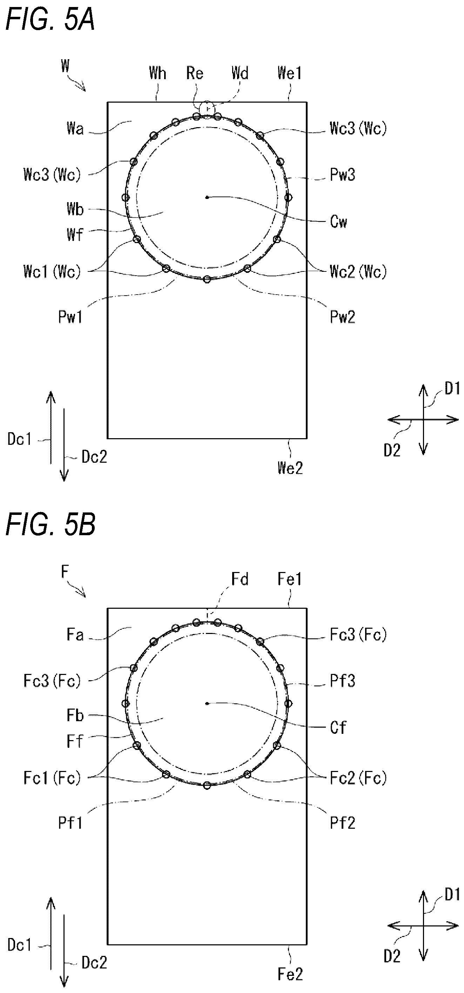

The printing unit 1 is disposed below the die unit 3, the front member feed unit 4, the back member feed unit 5, the pressing unit 6, and the take-out unit 7. The printing unit 1 is grounded. An installation area of the printing unit 1 is equal to or larger than an installation area of the die unit 3. The printing unit 1 is an inkjet printer that prints an image on a printing medium W (FIG. 5A to be described later) such as a transparent film. The printing unit 1 performs printing on the printing medium W. The printing unit 1 includes an ejection head 10 that discharges ink droplets onto the printing medium W, a conveying motor 11 that drives a conveying roller, and a discharge tray 1t (FIG. 7) to be described later that discharges the printing medium W after printing to the outside. The ejection head 10 may be of a serial head type or a line head type.

The printing unit 1 includes a sheet holder (not illustrated) that holds a plurality of printing media W and a plurality of white films F (FIG. 5B to be described later), and the printing media W and the white films F are held on the sheet holder as a bundle in which the printing media W and the white films F are alternately stacked. The white film F is fed to the conveying unit 2 without being printed by the printing unit 1, and the printing medium W is fed to the conveying unit 2 after a predetermined image is printed by the ejection head 10 of the printing unit 1. The predetermined image is an inverted image that becomes a normal image when a user views the image from a surface opposite to a surface on which the image is printed among the surfaces of the printing medium W. In the present embodiment, an example in which the printing unit 1 is an inkjet printer has been described, but without being limited thereto, the printing unit 1 may be another printer such as a laser printer or a thermal printer.

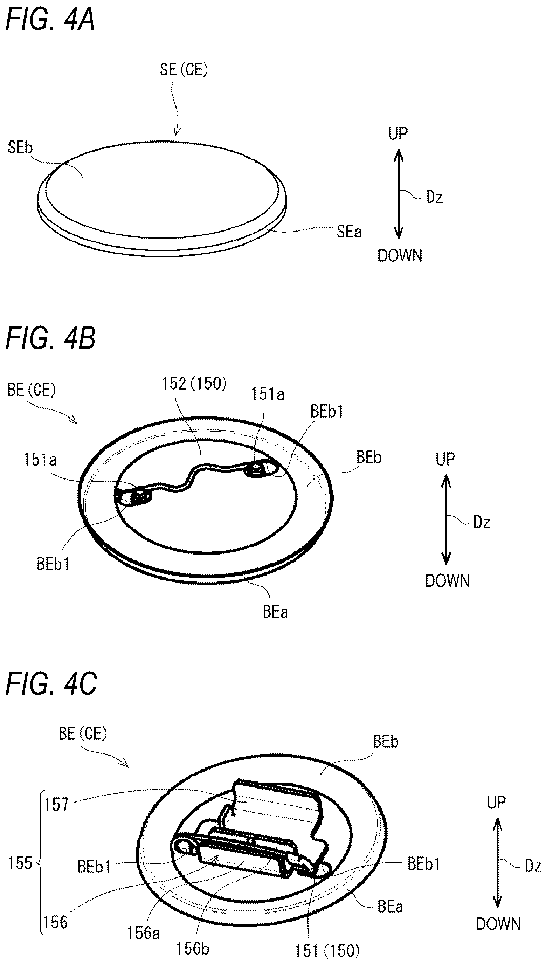

Regarding the conveying unit 2, a part of the conveying unit 2 is disposed in front of the printing unit 1, and the entire conveying unit 2 is disposed in front of the die unit 3. At least a part of the conveying unit 2 is disposed on a lateral side of the printing unit 1. In the present embodiment, a part of the conveying unit 2 is disposed in front of the printing unit 1. At least a part of the conveying unit 2 straddles the lateral side of the printing unit 1 and a lateral side of the die unit 3. That is, at least a part of the conveying unit 2 is disposed over the front of the printing unit 1 and the front of the die unit 3. Further, the conveying unit 2 is not disposed between the printing unit 1 and the die unit 3 in the conveying direction Dc1 which is a direction in which the printing medium W and the white film F conveyed from the printing unit 1 are directed toward the die unit 3. That is, a part of the conveying unit 2 overlaps the printing unit 1 in the conveying direction Dc1. The conveying unit 2 conveys, along the conveying direction Dc1, the printing medium W and the white film F onto a front member SE (FIG. 4A) included in a button member CE described later which is supplied prior to a lower mold 30 provided in the die unit 3, the printing medium W and the white film F being conveyed from the printing unit 1.

The die unit 3 connects the front member SE and a back member BE (FIGS. 4B and 4C) described later included in the button member CE. Specifically, the die unit 3 caulks the front member SE and the back member BE. The die unit 3 is disposed above the printing unit 1. The die unit 3 includes the lower mold 30, a lower mold 31, a rotation support table 32, an upper mold 33, an upper die lifting motor 34, a lower mold moving motor 140, a base plate 3p, and a handle 3h. The base plate 3p of the die unit 3 has a flat plate shape and is disposed on the printing unit 1. As described above, the installation area of the printing unit 1 is equal to or larger than the installation area of the die unit 3, and the installation area of the die unit 3 in this case is an installation area of the base plate 3p with respect to the printing unit 1. The handle 3h is to be held by the user. The handle 3h has a substantially U shape and is provided on the base plate 3p. The handle 3h is disposed in front of and to the left of the base plate 3p. The lower mold 30 and the lower mold 31 are formed in a circular shape in a plan view, and are supported by the rotation support table 32. The lower mold 30 and the lower mold 31 face each other with a center of the rotation support table 32 as a reference. The upper mold 33 is raised or lowered to approach or separate from either the lower mold 30 or the lower mold 31 in the up-down direction Dz based on an operation of the upper die lifting motor 34.

The rotation support table 32 rotates around the up-down direction Dz based on an operation of the lower mold moving motor 140. By rotating the rotation support table 32, either the lower mold 30 or the lower mold 31 can be located at a second mold position to be described later, which is a position facing the upper mold 33 in the up-down direction Dz. A position facing the second mold position in the front-rear direction Dx is referred to as a first mold position to be described later. When the lower mold 30 is at the first mold position, the front member SE is supplied to the lower mold 30 by the front member feed unit 4. Accordingly, the lower mold 30 supports the front member SE. After the white film F is conveyed onto the front member SE by the conveying unit 2, first separation processing to be described later is performed. Accordingly, only a later-described connected portion Fb of the white film F is disposed on the front member SE. Subsequently, second separation processing to be described later is performed after the printing medium W is conveyed onto the connected portion Fb on the front member SE by the conveying unit 2. Accordingly, only a later-described connected portion Wb of the printing medium W is disposed on the connected portion Fb.

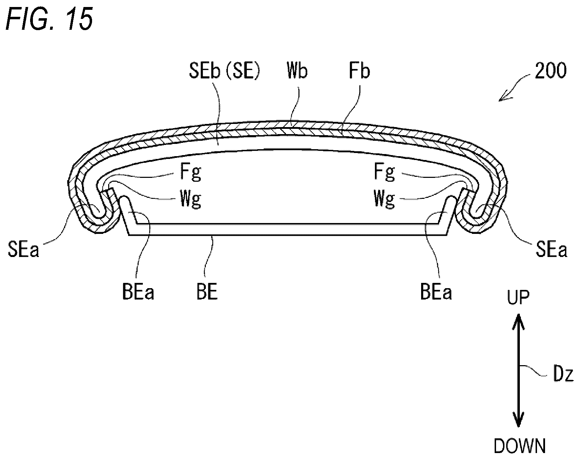

Next, the lower mold 30 at the first mold position while supporting the front member SE is located at the second mold position by rotating the rotation support table 32. At this time, the lower mold 31 at the second mold position moves to the first mold position. Then, the upper mold 33 is lowered, and the front member SE supported by the lower mold 30 is held by the upper mold 33. Thereafter, the upper mold 33 is raised, and the front member SE is separated from the lower mold 30 by the upper mold 33. At this time, the back member BE is supplied to the lower mold 31 by the back member feed unit 5. Subsequently, the lower mold 31 at the first mold position is located at the second mold position by rotating the rotation support table 32. Thereafter, the upper mold 33 holding the front member SE is lowered toward the lower mold 31 supporting the back member BE, so that the back member BE is caulked to the front member SE. In this way, the die unit 3 manufactures a button product 200 to be described later (FIG. 15) by caulking the back member BE held by the lower mold 31 and the front member SE held by the upper mold 31. Thereafter, the lower mold 31 at the second mold position is located at the first mold position by rotating the rotation support table 32. Then, the button product 200 supported by the lower mold 31 moved to the first mold position is taken out by the take-out unit 7.

The front member feed unit 4 is disposed above the printing unit 1 and to the right of the die unit 3. The front member feed unit 4 includes a front member stocker 40 and a pusher motor 46. The front member stocker 40 accommodates at least one of the front member SE in a state of being stacked in a height direction. The front member feed unit 4 supplies the front member SE to the lower mold 30 by a pusher pushing out the front member SE based on an operation of the pusher motor 46.

The back member feed unit 5 is disposed above the printing unit 1 and to the left of the die unit 3. The back member feed unit 5 includes a back member stocker 50 and a pusher motor 56. The back member stocker 50 accommodates at least one of the back member BE in a state of being stacked in the height direction. A height of the back member stocker 50 is higher than a height of the front member stocker 40. The back member feed unit 5 supplies the front member SE to the lower mold 31 by a pusher pushing out the back member BE based on an operation of the pusher motor 56.

The pressing unit 6 is disposed in front of the front member feed unit 4 and the back member feed unit 5 and to the left of the die unit 3. The pressing unit 6 includes a pressing motor 60. The pressing unit 6 presses the printing medium W and the white film F toward the lower mold 30 based on an operation of the pressing motor 60.

The take-out unit 7 is disposed in front of the front member feed unit 4. The take-out unit 7 includes a take-out motor 70. The take-out unit 7 takes out the button product 200 from the lower mold 31 based on an operation of the take-out motor 70, and guides the button product 200 to the button product container 9 disposed in front of the take-out unit 7.

The button product manufacturing device 100 further includes a control device 110, a first drive circuit 115, a second drive circuit 116, a third drive circuit 117, a fourth drive circuit 118, a fifth drive circuit 119, a sixth drive circuit 120, and a seventh drive circuit 150, as illustrated in FIG. 3. The control device 100 includes an interface 111, a calculation unit 112, and a storage unit 113. The interface 111 receives, as print data, various data such as image data from an external device 114 such as a computer, a camera, a communication network, a recording medium, a display, and a printer. The control device 110 may be implemented by a single device, or may have a configuration in which a plurality of devices are arranged in a distributed manner and cooperate with one another to operate the button product manufacturing device 100.

The storage unit 113 is a memory accessible from the calculation unit 112 and includes a RAM and a ROM. The RAM temporarily stores various data including data received from the external device 114 such as image data, data converted by the calculation unit 112, and the like. The ROM stores a button product manufacturing program for performing various types of processing, predetermined data, and the like. The button product manufacturing program may be stored in an external storage medium different from the storage unit 113 and accessible from the calculation unit 112, such as a CD-ROM.

The calculation unit 112 includes at least one circuit, for example, a processor such as a CPU, and an integrated circuit such as an ASIC. The calculation unit 112 executes the button product manufacturing program to control each unit.

The control device 110 outputs a control signal to the first drive circuit 115. The first drive circuit 115 generates a drive signal based on the control signal and outputs the drive signal to the ejection head 10 of the printing unit 1. The ejection head 10 is driven in response to the drive signal, which causes ink droplets to be ejected from a nozzle. Specifically, the first drive circuit 115 causes the ink droplets to be ejected from the ejection head 10 onto the printing medium W while moving the ejection head 10 in a predetermined movement direction based on the image data acquired from the external device 114. Then, the first drive circuit 115 drives the conveying motor 11 to convey the printing medium W in a conveying direction (not illustrated). The first drive circuit 115 alternately repeats the printing pass and the conveying operation in this way, so that an image based on the image data is printed on the printing medium W.

The control device 110 outputs a control signal to the second drive circuit 116. The second drive circuit 116 generates a drive signal based on the control signal and controls an operation of a conveying motor 23 provided in the conveying unit 2. In this case, the second drive circuit 116 controls the operation of the conveying motor 23 based on a detection result by a later-described first conveying sensor S1 provided in the conveying unit 2. Accordingly, the printing medium W and the white film F from the printing unit 1 are conveyed to the lower mold 30 by the conveying unit 2.

The control device 110 outputs a control signal to the third drive circuit 117. The third drive circuit 117 generates a drive signal based on the control signal and controls operations of the upper die lifting motor 34 and the lower mold moving motor 140 provided in the die unit 3. In addition, the control device 110 outputs a control signal to the fourth drive circuit 118. The fourth drive circuit 118 generates a drive signal based on the control signal and controls the operation of the pusher motor 46 provided in the front member feed unit 4. Further, the control device 110 outputs a control signal to the fifth drive circuit 119. The fifth drive circuit 119 generates a drive signal based on the control signal and controls the operation of the pusher motor 56 provided in the back member feed unit 5. In addition, the control device 110 outputs a control signal to the sixth drive circuit 120. The sixth drive circuit 120 generates a drive signal based on the control signal and controls the operation of the pressing motor 60 provided in the pressing unit 6. In addition, the control device 110 outputs a control signal to the seventh drive circuit 150. The seventh drive circuit 150 generates a drive signal based on the control signal and controls the operation of the take-out motor 70 provided in the take-out unit 7.

### (Front Member and Back Member)

FIG. 4A is a perspective view of the front member SE. FIG. 4B is a perspective view of the back member BE as viewed from a front side. FIG. 4C is a perspective view of the back member BE as viewed from a back side.

As illustrated in FIG. 4A, the front member SE is included in the button member CE constituting the button product 200 together with the printing medium W. The front member SE has a front member body SEb having, for example, a circular shape in a plan view, and a peripheral edge portion SEa provided on a peripheral edge of the front member body SEb and protruding downward. The front member SE is formed of a magnetic material such as a tin-plated steel plate.

As illustrated in FIG. 4B, the back member BE is included in the button member CE constituting the button product 200 together with the front member SE. The back member BE has a back member body BEb having, for example, a circular shape in a plan view, and a peripheral edge portion BEa provided on a peripheral edge of the back member body BEb and protruding upward. The back member BE is formed of a magnetic material such as a tin-plated steel plate. The back member body BEb is provided with two holes BEb1 spaced apart from each other in a radial direction.

As illustrated in FIGS. 4B and 4C, a safety pin 150 is provided on the back side of the back member body BEb. The safety pin 150 includes a pin body 151, protruding portions 151a coupled to the pin body 151 and spaced apart from each other in the radial direction of the back member body BEb, and a coupling portion 152. The protruding portions 151a of the safety pin 150 are inserted into the respective holes BEb1 to protrude to the front side of the back member body BEb. The coupling portion 152 couples one protruding portion 151a and the other protruding portion 151a on the front side of the back member body BEb. With the above configuration, the safety pin 150 is attached to the back member BE.

Here, a fixing jig 155 is detachably provided with respect to the back member BE. The fixing jig 155 has supported portions 156 and 157 spaced apart from each other in the radial direction. The supported portion 156 has walls 156a and 156b spaced apart from each other in the radial direction. The wall 156b is disposed at a position closer to the supported portion 157 than the wall 156a. A height of the wall 156a is higher than a height of the wall 156b. The pin body 151 is disposed between the wall 156a and the wall 156b. The pin body 151 is supported in a state of being erected from the wall 156a and the wall 156b. The wall 156a of the supported portion 156 and the supported portion 157 are supported by the back member body BEb of the back member BE, which is located below the back member BE provided with the wall 156a of the supported portion 156 and the supported portion 157, when being stacked and accommodated in the back member feed unit 5 in the up-down direction Dz. Accordingly, it is possible to avoid interference between the stacked one back member BE and the other back member BE, and thus it is possible to prevent occurrence of damage due to contact between the back members BE. After the button product 200 is manufactured, the user can rotate the supported portion 157 upward while gripping the supported portion 157, thereby releasing the support of the pin body 151 by the supported portion 156. Accordingly, the fixing jig 155 can be detached from the back member BE.

### (Printing Medium and White Film)

Next, the printing medium W and the white film F conveyed from the printing unit 1 toward the lower mold 30 by the conveying unit 2 will be described. FIG. 5A is a plan view illustrating the printing medium W, and FIG. 5B is a plan view illustrating the white film F.

The printing medium W constitutes the button product 200 together with the front member SE and the back member BE as the button member CE, and is, for example, a transparent sheet. As illustrated in FIG. 5A, the printing medium W has a rectangular shape. The printing medium W has one end We1 in a direction D1 parallel to the conveying direction Dc1 when being conveyed toward the die unit 3 by the conveying unit 2, and the other end We2 opposite to the one end We1. In the conveying direction Dc1, the one end We1 of the printing medium W corresponds to a downstream end, and the other end We2 corresponds to an upstream end.

The printing medium W includes the sheet-shaped connected portion Wb connected to the front member SE and the back member BE by the die unit 3, a sheet-shaped remaining portion Wa different from the connected portion Wb, and a plurality of coupling portions Wc coupling the connected portion Wb and the remaining portion Wa. The remaining portion Wa surrounds the connected portion Wb. Accordingly, the remaining portion Wa has the one end We1 and the other end We2 in the direction D1. The printing medium W includes the plurality of coupling portions Wc and cut portions Wf each located between the adjacent coupling portions Wc, at a boundary between the connected portion Wb and the remaining portion Wa. Accordingly, the connected portion Wb and the remaining portion Wa are cut and not coupled between the adjacent coupling portions Wc. The connected portion Wb has, for example, a circular shape in a plan view and is located closer to the one end We1 than to the other end We2. That is, the connected portion Wb is unevenly distributed toward the one end We1 with respect to the remaining portion Wa. The connected portion Wb has a size the same as the connected portion Fb or larger than the connected portion Fb.

The printing medium W further includes a linear weak portion Wd extending from an edge portion Wh on the one end We1 to the connected portion Wb. The coupling portion Wc and the linear weak portion Wd form a weak portion having lower strength than the connected portion Wb and the remaining portion Wa. Specifically, the linear weak portion Wd and combination of the coupling portion Wc and the cut portion Wf are formed by perforations having the same thickness as the connected portion Wb and the remaining portion Wa but are partially cut. As another example, the coupling portion Wc and the linear weak portion Wd are recesses or the like having a thickness thinner than that of the connected portion Wb and the remaining portion Wa.

The coupling portion Wc includes a coupling portion Wc1, a coupling portion Wc2, and a coupling portion Wc3. The coupling portion Wc1 couples the connected portion Wb and the remaining portion Wa at a predetermined position Pw1 on the boundary between the connected portion Wb and the remaining portion Wa. The coupling portion Wc2 couples the connected portion Wb and the remaining portion Wa at a position Pw2 on the boundary different from the position Pw1. The coupling portion Wc3 couples the connected portion Wb and the remaining portion Wa at a position Pw3 on the boundary different from the positions Pw1 and Pw2.

The coupling portion Wc is provided at the predetermined position Pw3 on the boundary between the connected portion Wb and the remaining portion Wa, the number of the coupling portion Wc at the position Pw3 being larger than the number of the coupling portion Wc at the positions Pw1 and Pw2. That is, the number of the coupling portion Wc3 is larger than the total number of the coupling portion Wc1 and the coupling portion Wc2. The two coupling portions Wc present on a straight line orthogonal to the conveying direction Dc1 and passing through a center Cw of the connected portion Wb may be included in the coupling portion Wc1 and the coupling portion Wc2, or may be included in the coupling portion Wc3.

A configuration of the white film F is basically the same as the configuration of the printing medium W. Similarly to the printing medium W, the white film F constitutes the button product 200 together with the front member SE and the back member BE as the button member CE. As illustrated in FIG. 5B, the white film F has a rectangular shape. The white film F has one end Fe1 in the direction D1 and the other end Fe2 on a side opposite to the one end Fe1. In the conveying direction Dc1, the one end Fe1 of the white film F corresponds to a downstream end, and the other end Fe2 corresponds to an upstream end.

The white film F includes a sheet-shaped connected portion Fb connected to the front member SE and the back member BE by the die unit 3, a sheet-shaped remaining portion Fa different from the connected portion Fb, and a plurality of coupling portions Fc coupling the connected portion Fb and the remaining portion Fa. The remaining portion Fa surrounds the connected portion Fb. Accordingly, the remaining portion Fa has the one end Fe1 and the other end Fe2 in the direction D1. The white film F includes the plurality of coupling portions Fc and cut portions Ff each located between the adjacent coupling portions Fc, at a boundary between the connected portion Fb and the remaining portion Fa. Accordingly, the connected portion Fb and the remaining portion Fa are cut and not coupled between the adjacent coupling portions Fc. The connected portion Fb has, for example, a circular shape in a plan view and is located closer to the one end Fe1 than to the other end Fe2. That is, the connected portion Fb is unevenly distributed toward the one end Fe1 with respect to the remaining portion Fa.

The white film F further includes a linear weak portion Fd extending from the one end Fe1 to the connected portion Fb. The coupling portion Fc and the linear weak portion Fd form a weak portion having lower strength than the connected portion Fb and the remaining portion Fa. Specifically, the linear weak portion Fd and combination of the coupling portion Fc and the cut portion Ff are formed by perforations having the same thickness as the connected portion Fb and the remaining portion Fa but are partially cut. As another example, the coupling portion Fc and the linear weak portion Fd are recesses or the like having a thickness thinner than that of the connected portion Fb and the remaining portion Fa.

The coupling portion Fc includes a coupling portion Fc1, a coupling portion Fc2, and a coupling portion Fc3. The coupling portion Fc1 couples the connected portion Fb and the remaining portion Fa at a position Pf1 on a boundary between the connected portion Fb and the remaining portion Fa and corresponding to the position Pw1. The coupling portion Fc2 couples the connected portion Fb and the remaining portion Fa at a position Pf2 on the boundary and corresponding to the position Pw2. The coupling portion Fc3 couples the connected portion Fb and the remaining portion Fa at a position Pf3 on the boundary and corresponding to the position Pw3.

The coupling portion Fc is provided at the predetermined position Pf3 on the boundary between the connected portion Fb and the remaining portion Fa, the number of the coupling portion Fc at the position Pf3 being larger than the number of the coupling portion Fc at the positions Pf1 and Pf2. That is, the number of the coupling portion Fc3 is larger than the total number of the coupling portion Fc1 and the coupling portion Fc2. The two coupling portions Fc present on a straight line orthogonal to the conveying direction Dc1 and passing through a center Cf of the connected portion Fb may be included in the coupling portion Fc1 and the coupling portion Fc2, or may be included in the coupling portion Fc3.

After the white film F is conveyed onto the front member SE by the conveying unit 2, the connected portion Fb of the white film F is pressed against the lower mold 30 by the pressing unit 6. Then, the white film F is conveyed, by the conveying unit 2, in a conveying direction Dc2 opposite to the conveying direction Dc1 in a state where the connected portion Fb is pressed. By such first separation processing, only the connected portion Fb is disposed on the front member SE, and the remaining portion Fa is conveyed to and collected in the collection box 8 after being separated from the connected portion Fb. The same applies to the printing medium W. That is, after the printing medium W is conveyed by the conveying unit 2 onto the connected portion Fb disposed on the front member SE as described above, the connected portion Wb of the printing medium W is pressed against the lower mold 30 by the pressing unit 6. Then, the printing medium W is conveyed in the conveying direction Dc2 by the conveying unit 2 in a state where the connected portion Wb is pressed. By such second separation processing, only the connected portion Wb is disposed on the connected portion Fb on the front member SE, and the remaining portion Wa is conveyed to and collected in the collection box 8 after being separated from the connected portion Wb. By the above processing, the connected portion Fb and the connected portion Wb are disposed in this order on the front member SE.

### (Conveying Unit and Discharge Unit)

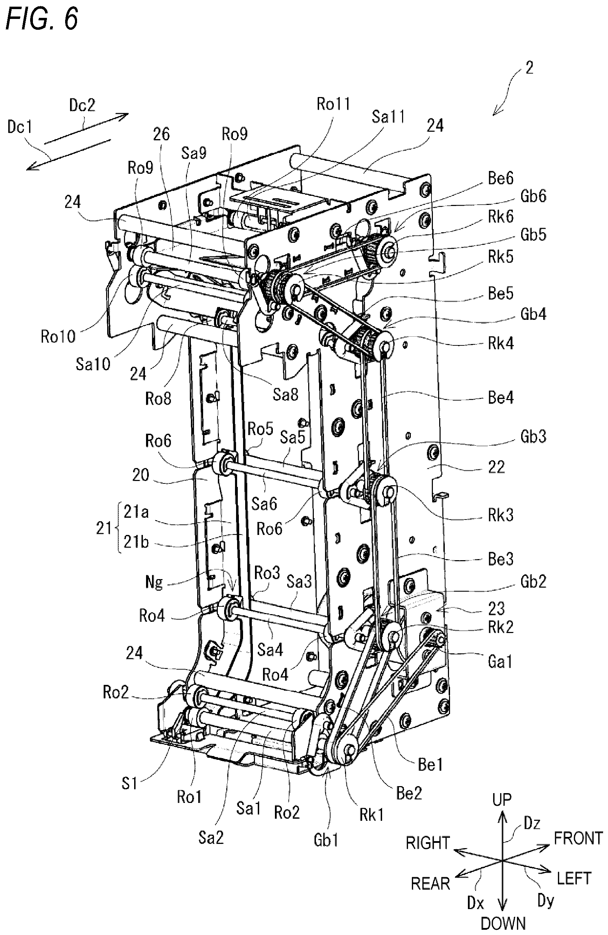

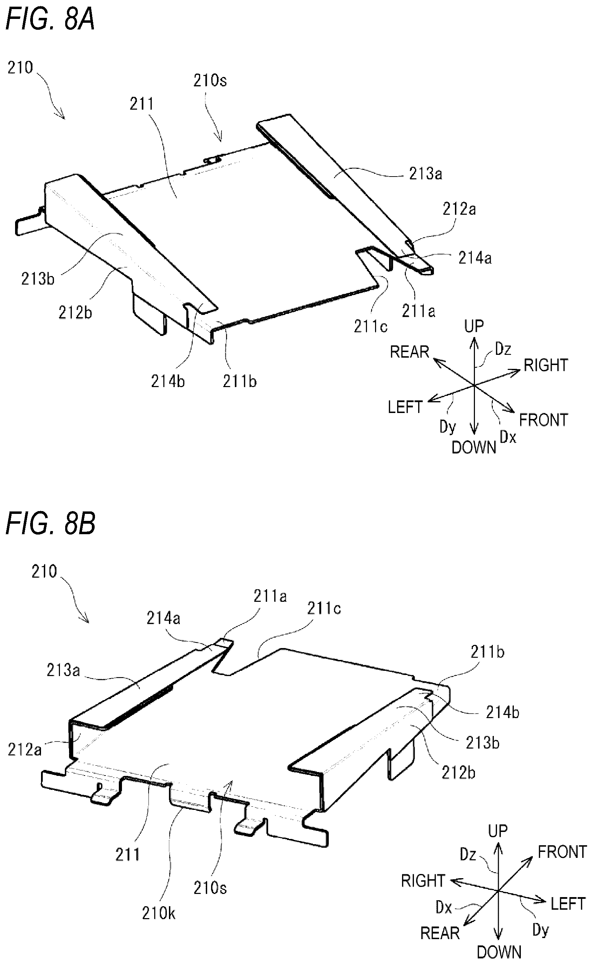

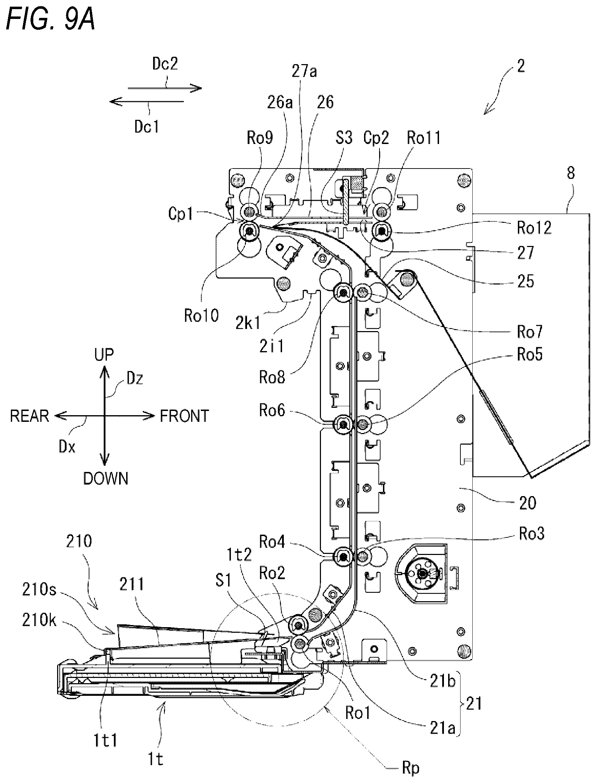

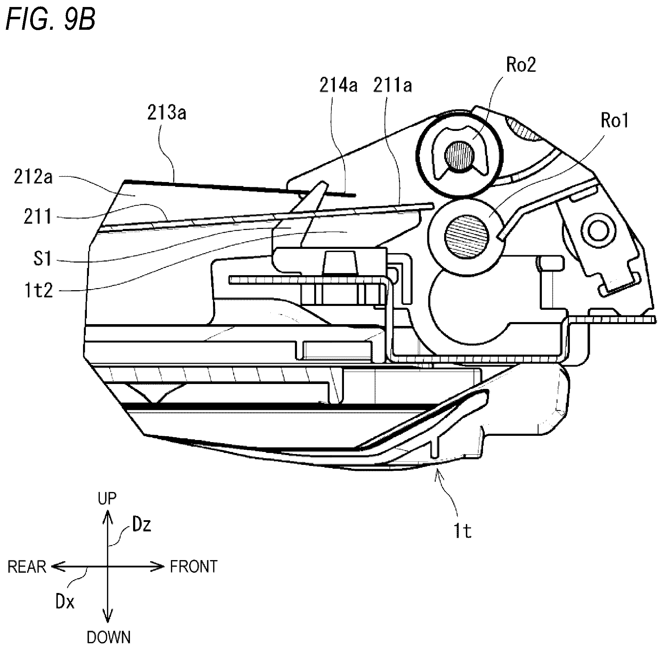

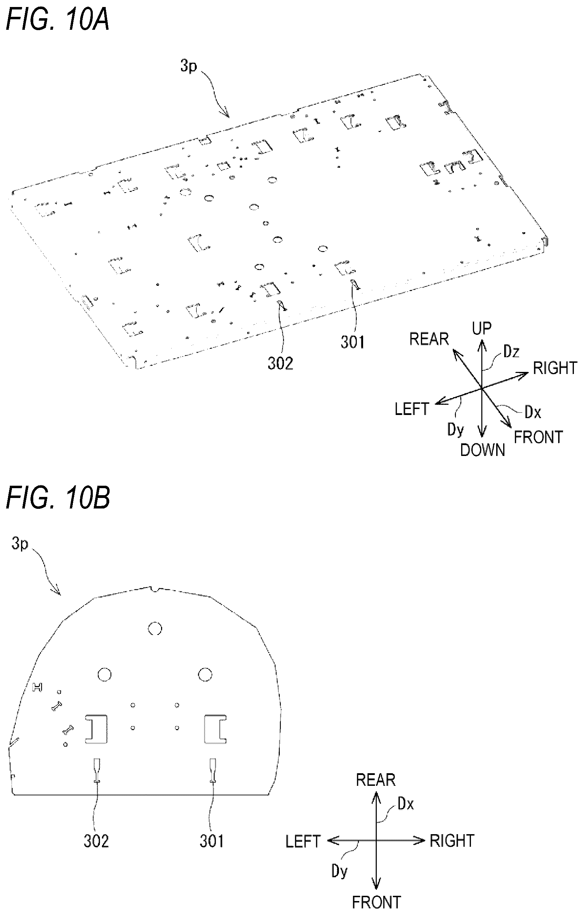

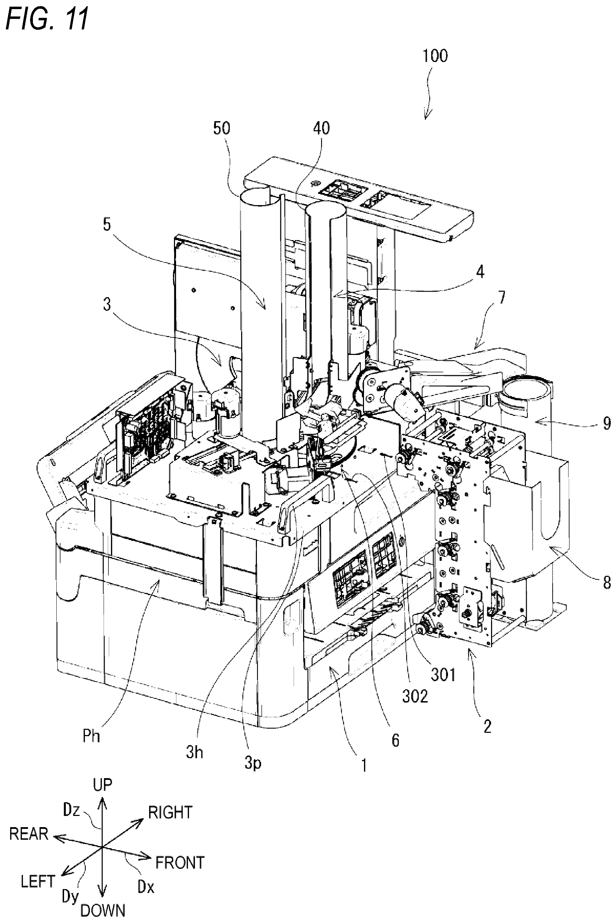

Next, the conveying unit 2 and the discharge unit 210 will be described. FIG. 6 is a perspective view illustrating the conveying unit 2. FIG. 7 is a perspective view illustrating the discharge unit 210 connected to the conveying unit 2 in FIG. 6. FIG. 8A is a perspective view illustrating the discharge unit 210 in FIG. 7, and FIG. 8B is a perspective view of the discharge unit 210 in FIG. 7 as viewed from a direction different from FIG. 8A. FIG. 9A is a sectional view illustrating the discharge unit 210 connected to the conveying unit 2 in FIG. 6, and FIG. 9B is an enlarged sectional view of a region Rp in FIG. 9A. FIG. 10A is a perspective view illustrating the base plate 3p of the die unit 3, and FIG. 10B is a partially enlarged plan view of the base plate 3p in FIG. 10A. FIG. 11 is a perspective view illustrating the conveying unit 2 detached from the die unit 3.

The conveying unit 2 conveys the printing medium W and the white film F conveyed from the printing unit 1 onto the front member SE, which is supplied prior to the lower mold 30, along the conveying direction Dc1 toward the die unit 3. In addition, the conveying unit 2 conveys the remaining portion Wa of the printing medium W and the remaining portion Fa of the white film F to the collection box 8 along the conveying direction Dc2. Accordingly, the remaining portion Wa of the printing medium W and the remaining portion Fa of the white film F are collected in the collection box 8 as waste portions. In the present embodiment, film conveying processing is executed in which the white film F is conveyed, prior to the printing medium W, by the conveying unit 2 to be placed on the front member SE held by the lower mold 30. Since a conveying method of the printing medium W by the conveying unit 2 is the same as a conveying method of the white film F, the conveyance of the printing medium W will be representatively described below.

The conveying unit 2 includes support plates 20 and 22, a pair of conveying guides 21, the conveying motor 23, a plate coupling shaft 24, drive rollers Rk1 to Rk6, and endless drive belts Be1 to Be6, as illustrated in FIGS. 6, 7, and 9A. In the present embodiment, the support plate 20 corresponds to a first support plate, and the support plate 22 corresponds to a second support plate.

The support plates 20 and 22 extend in the up-down direction Dz and are spaced apart from each other in the left-right direction Dy as a predetermined direction orthogonal to the conveying direction Dc1. The support plate 20 and the support plate 22 are coupled by a plurality of plate coupling shafts 24 extending in the left-right direction Dy as the predetermined direction. The support plate 20 is provided with the conveying guide 21 that curves forward from a lower end rear portion of the support plate 20 and extends upward. The conveying guide 21 is also provided on the support plate 22. The conveying guide 21 includes a first guide body 21a and a second guide body 21b. A groove-shaped space is provided between the first guide body 21a and the second guide body 21b, and ends of the printing medium W in the left-right direction Dy are inserted into the space during conveyance. The first guide body 21a has a shape being bent or curved forward from the lower end rear portion of the support plate 20 and then being bent or curved rearward while extending upward. The second guide body 21b has a shape being bent or curved forward from the lower end rear portion of the support plate 20 and then extending upward. The first guide body 21a is disposed behind the second guide body 21b as a whole.

Here, the base plate 3p of the die unit 3 is provided with engaged portions 301 and 302 formed of, for example, a through hole, as illustrated in FIGS. 10A and 10B. The engaged portions 301 and 302 are provided at a front portion of the base plate 3p. The engaged portion 301 and the engaged portion 302 are spaced apart from each other in the left-right direction Dy. The conveying unit 2 includes engaging portions 2k1 and 2k2 that engage with the engaged portions 301 and 302 provided on the base plate 3p of the die unit 3, respectively. The engaging portion 2k1 corresponds to a first engaging portion, and the engaging portion 2k2 corresponds to a second engaging portion. The engaging portions 2k1 and 2k2 may be, for example, projections protruding downward. The engaging portion 2k1 is provided on the support plate 20, and the engaging portion 2k2 is provided on the support plate 22. The engaging portion 2k1 is disposed at an upper rear portion of the support plate 20, and the engaging portion 2k2 is disposed at an upper rear portion of the support plate 22.

The support plate 20 has a positioning portion 2i1 for positioning in the up-down direction with respect to the base plate 3p, and the support plate 22 has a positioning portion 2i2 for positioning in the up-down direction with respect to the base plate 3p. The positioning portion 2i1 corresponds to a first positioning portion, and the positioning portion 2i2 corresponds to a second positioning portion. The positioning portion 2i1 protrudes downward, for example, and is disposed in front of the engaging portion 2k1. A lower end of the positioning portion 2i1 is located above a lower end of the engaging portion 2k1. The positioning portion 2i2 protrudes downward, for example, and is disposed in front of the engaging portion 2k2. A lower end of the positioning portion 2i2 is located above a lower end of the engaging portion 2k2. In the above configuration, the engaging portion 2k1 is engaged with the engaged portion 301 and the engaging portion 2k2 is engaged with the engaged portion 302 in a state where the positioning portions 2i1 and 2i2 abut against a predetermined portion of the base plate 3p. Accordingly, the conveying unit 2 is positioned with respect to the die unit 3 in a state where the position of the support plates 20 and 22 in the up-down direction with respect to the base plate 3p is positioned.

As described above, the support plates 20 and 22 can be attached to the base plate 3p by engaging the engaging portion 2k1 with the engaged portion 301 and engaging the engaging portion 2k2 with the engaged portion 302. Accordingly, the conveying unit 2 can be positioned with respect to the die unit 3. Conversely, the conveying unit 2 can be detached from the base plate 3p as illustrated in FIG. 11 by releasing the engagement of the engaging portion 2k1 with the engaged portion 301 and releasing the engagement of the engaging portion 2k2 with the engaged portion 302. In this way, the conveying unit 2 is detachably provided with respect to the die unit 3.

A right end, which is one end of one plate coupling shaft 24 among the plurality of plate coupling shafts 24, is connected to the engaging portion 2k1, and a left end, which is the other end of the plate coupling shaft 24, is connected to the engaging portion 2k2. Accordingly, the plate coupling shaft 24 connects the engaging portion 2k1 and the engaging portion 2k2. A right end of the plate coupling shaft 24 is disposed at a position closer to the positioning portion 2i1 than the engaging portion 2k1, and a left end of the plate coupling shaft 24 is disposed at a position closer to the positioning portion 2i2 than the engaging portion 2k2. More specifically, the right end of the plate coupling shaft 24 is disposed at a position closer to a rear end of the positioning portion 2i1 than a lower end of the engaging portion 2k1, and the left end of the plate coupling shaft 24 is disposed at a position closer to a rear end of the positioning portion 2i2 than a lower end of the engaging portion 2k2.

The conveying motor 23 is provided on the support plate 22. A drive gear Ga1 is connected to a rotary shaft of the conveying motor 23. The drive rollers Rk1 to Rk6 are provided on the support plate 22. A drive gear Gb1 is connected to a rotary shaft of the drive roller Rk1. A drive gear Gb2 is connected to a rotary shaft of the drive roller Rk2. A drive gear Gb3 is connected to a rotary shaft of the drive roller Rk3. A drive gear Gb4 is connected to a rotary shaft of the drive roller Rk4. A drive gear Gb5 is connected to a rotary shaft of the drive roller Rk5. A drive gear Gb6 is connected to a rotary shaft of the drive roller Rk6. The drive rollers Rk1 to Rk6 are located to the left of the support plate 22. The drive roller Rk1 is disposed behind and below the drive gear Ga1. The drive roller Rk2 is disposed in front of the drive roller Rk1 and behind the drive gear Ga1 and is disposed above the drive roller Rk1. The drive roller Rk3 is disposed above the drive roller Rk2. The drive roller Rk4 is disposed above the drive roller Rk3. The drive roller Rk5 is disposed behind and above the drive roller Rk4. The drive roller Rk6 is disposed in front of the drive roller Rk5. The drive belt Be1 is stretched around the drive gear Ga1 and the drive gear Gb1. The drive belt Be2 is stretched around the drive gear Gb1 and the drive gear Gb2. The drive belt Be3 is stretched around the drive gear Gb2 and the drive gear Gb3. The drive belt Be4 is stretched around the drive gear Gb3 and the drive gear Gb4. The drive belt Be5 is stretched around the drive gear Gb4 and the drive gear Gb5. The drive belt Be6 is stretched around the drive gear Gb5 and the drive gear Gb6. With such a configuration, a drive force by the conveying motor 23 is transmitted to the drive roller Rk1, the drive roller Rk2, the drive roller Rk3, the drive roller Rk4, the drive roller Rk5, and the drive roller Rk6 via the drive belts Be1 to Be6.

The first guide body 21a and the second guide body 21b are provided with notches Ng corresponding to the drive rollers Rk2 to Rk4, respectively. The drive roller Rk1 includes a drive shaft Sa1 extending in the left-right direction Dy and a pair of drive-side rollers Ro1. A pair of driven-side rollers Ro2 are provided to face the pair of drive-side rollers Ro1, respectively. Each of the pair of driven-side rollers Ro2 is coupled to a driven shaft Sa2. The drive roller Rk2 includes a drive shaft Sa3 extending in the left-right direction Dy and a pair of drive-side rollers Ro3. A pair of driven-side rollers Ro4 are provided to face the pair of drive-side rollers Ro3, respectively. Each of the pair of driven-side rollers Ro4 is coupled to a driven shaft Sa4. Each of the pair of drive-side rollers Ro3 is disposed in the notch Ng of the first guide body 21a, and each of the pair of driven-side rollers Ro4 is disposed in the notch Ng of the second guide body 21b. Each end portion of the printing medium W in the left-right direction Dy is clamped between the drive-side roller Ro3 and the driven-side roller Ro4. Configurations corresponding to the drive rollers Rk5 and Rk6 (that is, pair of drive-side rollers, pair of driven-side rollers, drive shaft, and driven shaft) are the same as the configuration corresponding to the drive roller Rk1, and thus the description thereof will be omitted. In addition, configurations corresponding to the drive rollers Rk3 and Rk4 (that is, pair of drive-side rollers, pair of driven-side rollers, drive shaft, and driven shaft) are the same as the configuration corresponding to the drive roller Rk2, and thus the description thereof will be omitted.

When the conveying motor 23 is driven, the drive force by the conveying motor 23 is transmitted to the drive rollers Rk1 to Rk6. Accordingly, the printing medium W is conveyed to the lower mold 30 by rotation of the drive-side roller Ro1 and the driven-side roller Ro2, rotation of the drive-side roller Ro3 and the driven-side roller Ro4, rotation of the drive-side roller Ro5 and the driven-side roller Ro6, rotation of the drive-side roller Ro7 and the driven-side roller Ro8, and rotation of the drive-side roller Ro9 and the driven-side roller Ro10.

As illustrated in FIG. 9A, a conveying guide piece 25 is disposed, between the support plate 20 and the support plate 22, above the second guide body 21b and in front of the first guide body 21a as a whole. The conveying guide piece 25 has flexibility and is made of, for example, resin. A base end of the conveying guide piece 25 is fixed to the support plates 20 and 22, and a front end of the conveying guide piece 25 is a free end. The front end of the conveying guide piece 25 faces the first guide body 21a. A distance between the conveying guide piece 25 and the first guide body 21a decreases toward the rear, that is, toward the lower mold 30. The printing medium W is guided toward the drive-side roller Ro9 and the driven-side roller Ro10 by the first guide body 21a and the conveying guide piece 25. Thereafter, the printing medium W is conveyed to the lower mold 30 along the conveying direction Dc1 by the drive-side roller Ro9 and the driven-side roller Ro10. As described above, the first guide body 21a, the second guide body 21b, and the conveying guide piece 25 constitute a first conveying path Cp1 of the printing medium W toward the lower mold 30 of the die unit 3.

The first conveying sensor S1, which is, for example, a contact sensor, is provided behind the drive-side roller Ro1 and the driven-side roller Ro2. The second conveying sensor S2, which is, for example, a contact sensor, is provided between the first guide body 21a and the conveying guide piece 25. The second drive circuit 116 drives the conveying motor 23 when the printing medium W supplied from the printing unit 1 is detected by the first conveying sensor S1. When a downstream end of the printing medium W is detected by the second conveying sensor S2, the second drive circuit 116 controls driving of the conveying motor 23 by an encoder (not illustrated) based on a rotation amount of the conveying motor 23 immediately after the detection. Accordingly, the printing medium W is conveyed to a predetermined position of the die unit 3 with high accuracy.

A conveying guide 26 and a conveying guide piece 27 are provided between the drive-side roller Ro9 and the driven-side roller Ro10 and between a drive-side roller Ro11 and a driven-side roller Ro12, respectively. The conveying guide 26 is located above the conveying guide piece 27. The conveying guide 26 extends in the front-rear direction Dx. A rear end 26a (that is, end portion on lower mold 30 side) of the conveying guide 26 is bent upward. Meanwhile, the conveying guide piece 27 has flexibility and is made of, for example, resin. The conveying guide piece 27 extends in the front-rear direction Dx. A rear end 27a of the conveying guide piece 27 is located in front of the rear end 26a of the conveying guide 26. The rear end 27a of the conveying guide piece 27 is bent downward. The conveying guide piece 27 intersects the first conveying path Cp1 in a side view illustrated in FIG. 9A. In such a configuration, the conveying guide 26 and the conveying guide piece 27 constitute a second conveying path Cp2 of the remaining portions Wa and Fa from the lower mold 30 of the die unit 3 toward the collection box 8.

When the printing medium W is conveyed along the first conveying path Cp1, a lower surface of the conveying guide piece 27 is pressed by a downstream-side end of the printing medium W and is bent upward. Accordingly, the conveying guide piece 27 allows conveyance of the printing medium W from the drive-side roller Ro7 and the driven-side roller Ro8 to the drive-side roller Ro9 and the driven-side roller Ro10. When the printing medium W is conveyed in the conveying direction Dc1 and reaches a predetermined position of the lower mold 30, an upstream-side end of the printing medium W is in a state of being gripped by the drive-side roller Ro9 and the driven-side roller Ro10 and is in a state of being located on a downstream side of the first conveying path Cp1 with respect to the conveying guide piece 27. At this time, the conveying guide piece 27 returns to the state of intersecting the first conveying path Cp1 again due to its flexibility.

The printing medium W conveyed to the predetermined position of the lower mold 30 as described above is subjected to cutting processing, by the pressing unit 6, into the connected portion Wb and the remaining portion Wa. Thereafter, separation processing is performed in which the remaining portion Wa is separated from the connected portion Wb and only the remaining portion Wa is discarded. In the separation processing, the second drive circuit 116 reversely rotates the conveying motor 23 in a state where the connected portion Wb is pressed, by the pressing unit 6, against the front member SE disposed on the lower mold 30. In this case, the drive force by the conveying motor 23 (that is, drive force due to reverse rotation) is transmitted to the drive roller Rk5 and the drive roller Rk6 via the drive rollers Rk1 to Rk4. Accordingly, the remaining portion Wa is separated from the connected portion Wb. The remaining portion Wa is conveyed in the conveying direction Dc2 after separation, comes into contact with an outer surface of the conveying guide piece 27 to be guided to the second conveying path Cp2, and is conveyed toward the drive-side roller Ro11 and the driven-side roller Ro12. In this case, since the rear end 27a of the conveying guide piece 27 is bent downward, the remaining portion Wa is easily guided to the second conveying path Cp2. Thereafter, the edge portion We2 of the remaining portion Wa is clamped and conveyed between the drive-side roller Ro11 and the driven-side roller Ro12 and the remaining portion Wa is collected in the collection box 8.

A third conveying sensor S3, which is, for example, a contact sensor, is provided in front of the drive-side roller Ro9 and the driven-side roller Ro10 and behind the drive-side roller Ro11 and the driven-side roller Ro12. It is possible to determine whether the remaining portion Wa is conveyed to the collection box 8 based on a detection result by the third conveying sensor S3. When the remaining portion Wa cannot be detected by the third conveying sensor S3 within a predetermined time after the second drive circuit 116 starts to reversely rotate the conveying motor 23, the control device 110 determines that a jam of the remaining portion Wa occurs. In addition, when the remaining portion Wa is still detected after a predetermined time after the remaining portion Wa is detected by the third conveying sensor S3, the control device 110 may determine that a jam of the remaining portion Wa occurs. When it is determined that a jam of the remaining portion Wa occurs, the control device 110 causes the second drive circuit 116 to stop the rotation of the conveying motor 23.

Here, the discharge unit 210 is provided in the vicinity of the conveying unit 2, as illustrated in FIG. 7. The discharge unit 210 discharges the printing medium W printed by the printing unit 1 to the conveying unit 2. FIG. 7 illustrates the discharge tray 1t disposed inside the printing unit 1 in order to illustrate a positional relation between the discharge unit 210 and the conveying unit 2 with respect to the printing unit 1. A width of the discharge tray 1t (that is, length in left-right direction Dy) is larger than a width of the discharge unit 210. The discharge unit 210 is disposed behind a lower end of the conveying unit 2. The discharge unit 210 is disposed on the discharge tray 1t. The discharge unit 210 is disposed at a center of the discharge tray 1t in the left-right direction Dy.

The discharge unit 210 includes a support portion 211, walls 212a and 212b, eaves portions 213a and 213b, and an engaging portion 210k, as illustrated in FIGS. 8A and 8B. The support portion 211 extends in the front-rear direction Dx. The support portion 211 delivers the printing medium W after printing fed from the printing unit 1 to the pair of drive-side rollers Ro1 and the pair of driven-side rollers Ro2 while supporting the printing medium W. The wall 212a is erected at a right end of the support portion 211. The wall 212b is erected at a left end of the support portion 211. Accordingly, the wall 212a and the wall 212b are spaced apart from each other in the left-right direction Dy on the support portion 211. A distance between the wall 212a and the wall 212b gradually decreases toward the front. A height of the wall 212a and a height of the wall 212b gradually decrease toward the front. That is, the walls 212a and 212b each have a substantially trapezoidal shape.

The eaves portion 213a is erected at an upper end of the wall 212a. The eaves portion 213a extends in the front-rear direction Dx. The eaves portion 213a protrudes leftward. The eaves portion 213b is erected at an upper end of the wall 212b. The eaves portion 213b extends in the front-rear direction Dx. The eaves portion 213b protrudes rightward. A left end of the eaves portion 213a and a right end of the eaves portion 213b are spaced apart from each other in the left-right direction Dy. Accordingly, a part of the support portion 211 is exposed in the plan view. The eaves portions 213a and 213b are formed of, for example, a polyethylene terephthalate (PET) film. While a thickness of the printing medium W is, for example, 0.1 mm, a thickness of each of the eaves portions 213a and 213b is, for example, 0.25 mm. The eaves portions 213a and 213b are made of the above-described material and have a thickness larger than that of the printing medium W, so that the printing medium W can be supported from above and guided to the conveying unit 2 without being deformed by receiving a pressure from the printing medium W during conveyance.

An introduction port 210s is formed by a rear end of the support portion 211, rear ends of the walls 212a and 212b, and rear ends of the eaves portions 213a and 213b. The printing medium W fed from the printing unit 1 is introduced from the introduction port 210s to the support portion 211. The printing medium W introduced into the support portion 211 passes through a gap between a front right end 211a of the support portion 211 and a front end 214a of the eaves portion 213a and a gap between a front left end 211b of the support portion 211 and a front end 214b of the eaves portion 213b and is fed to the conveying unit 2. As described above, the printing medium W printed by the printing unit 1 is fed to the conveying unit 2 via the discharge unit 210.

Here, the support portion 211 has a notch 211c. The notch 211c is formed to avoid the first conveying sensor S1. The first conveying sensor S1 is located to the left of the front end 214a of the eaves portion 213a in the left-right direction Dy and is at a position not overlapping the front end 214a of the eaves portion 213a. The first conveying sensor S1 includes an actuator, and an upper end of the actuator is above the front end 214a of the eaves portion 213a in the up-down direction Dz. For example, when the upper end of the actuator is below the front end 214a of the eaves portion 213a in the up-down direction Dz, the printing medium W passing through the gap between the front left end 211b of the support portion 211 and the front end 214b of the eaves portion 213b may pass the gap without being detected by the first conveying sensor S1. However, with the above-described configuration, the printing medium W passing through the gap between the front left end 211b of the support portion 211 and the front end 214b of the eaves portion 213b is reliably detected by the first conveying sensor S1.

As illustrated in FIGS. 9A and 9B, the discharge tray 1t is provided with an engaged portion 1t1 and a placement portion 1t2. The engaging portion 210k of the discharge unit 210 is engaged with the engaged portion 1t1 of the discharge tray 1t. Accordingly, the support portion 211 of the discharge unit 210 is positioned at a predetermined position on the placement portion 1t2. In this case, the front end 214a of the eaves portion 213a and the front end 214b of the eaves portion 213b face a position between the drive-side roller Ro1 and the driven-side roller Ro2, and the front right end 211a and the front left end 211b of the support portion 211 also face a position between the drive-side roller Ro1 and the driven-side roller Ro2. Accordingly, the printing medium W passing through the gap between the front left end 211b of the support portion 211 and the front end 214b of the eaves portion 213b is smoothly clamped and conveyed by the drive-side roller Ro1 and the driven-side roller Ro2.

### (Cover of Printing Unit)

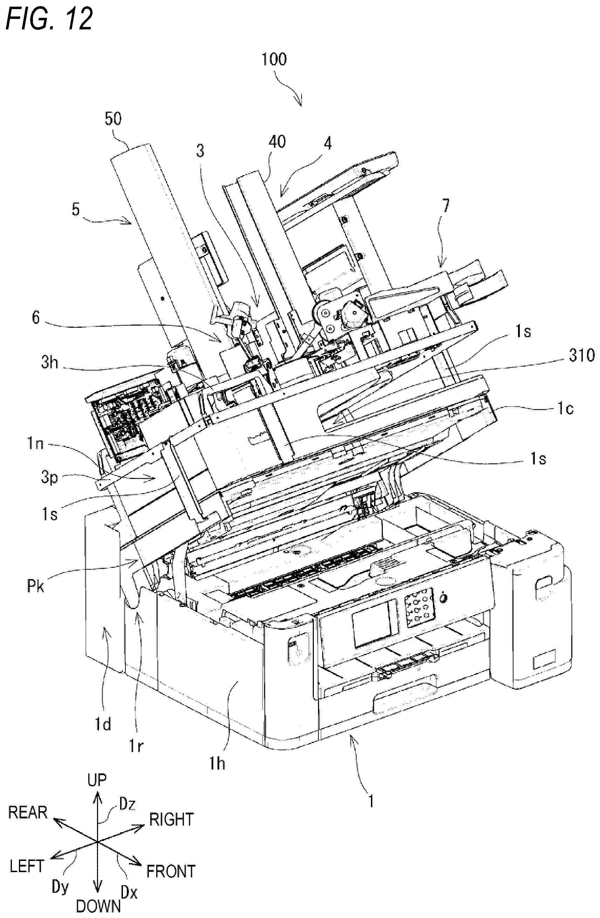

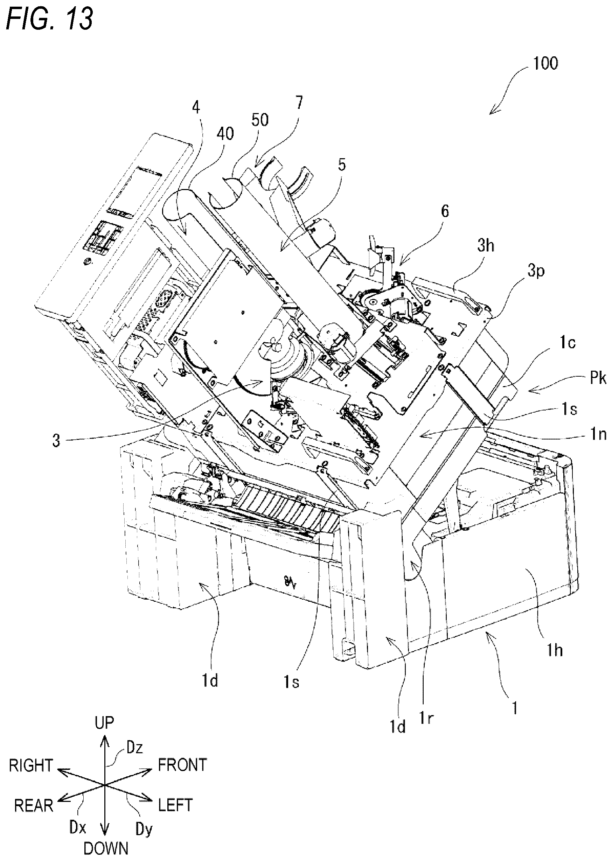

FIG. 12 is a perspective view illustrating a state where a cover 1c of the printing unit 1 is at an open position Pk. FIG. 13 is a perspective view of the cover 1c in FIG. 12 at the open position Pk as viewed from a direction different from that of FIG. 12.

As illustrated in FIGS. 12 and 13, the printing unit 1 includes a body 1h and the cover 1c disposed above the body 1h and rotatable between a close position Ph (FIG. 1) at which the body 1h is closed and the open position Pk at which the body 1h is opened. The body 1h of the printing unit 1 is provided with a conveying device including the ejection head 10 and the conveying motor 11. A rotation mechanism 1r that rotatably supports the cover 1c is provided at a rear portion of the body 1h. Accordingly, the cover 1c rotates between the close position Ph and the open position Pk via the rotation mechanism 1r. In this case, the cover 1c is rotatable from the close position Ph to the open position Pk in a state where the conveying unit 2 is detached from the die unit 3. More specifically, the user can rotate the cover 1c while gripping the handle 3h after the conveying unit 2 is detached from the base plate 3p of the die unit 3 by releasing the engagement of the engaging portion 2k1 with the engaged portion 301 and releasing the engagement of the engaging portion 2k2 with the engaged portion 302. The body 1h of the printing unit 1 is provided with, for example, a restriction member 1d that restricts a rotation angle of the cover 1c. When the cover 1c is at the open position Pk, the restriction member 1d comes into contact with a left rear end of the cover 1c to restrict the rotation angle of the cover 1c. When the cover 1c is at the open position Pk, the restriction member 1d comes into contact with a right rear end of the cover 1c to restrict the rotation angle of the cover 1c. Therefore, the cover 1c stops at the open position Pk. An angle formed by the cover 1c and a horizontal plane when the cover 1c is at the open position Pk is an angle at which the front member SE and the back member BE do not come out from an upper end of the corresponding stocker. For example, the angle formed by the cover 1c and the horizontal plane when the cover 1c is at the open position Pk is between 30 degrees and 50 degrees, and more preferably between 38 degrees and 43 degrees.

### (Die unit)

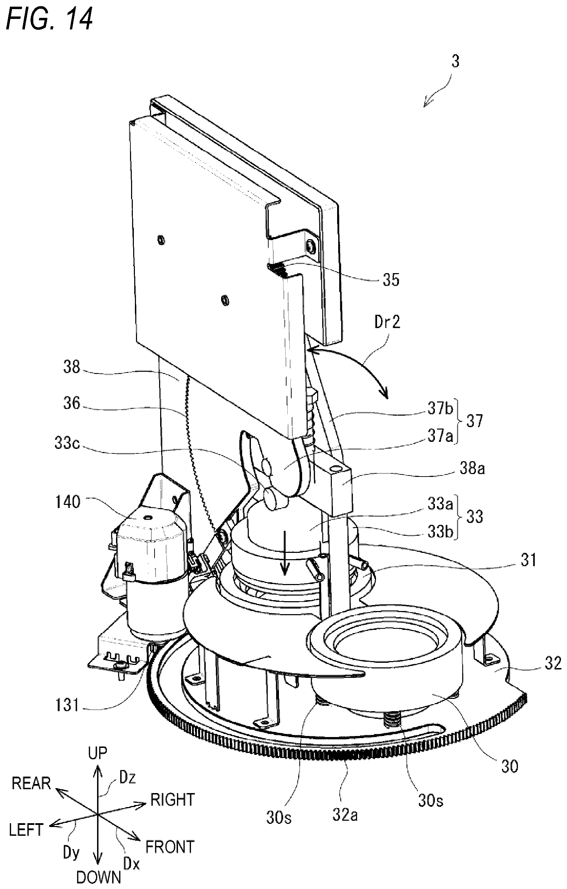

Next, the die unit 3 will be described. FIG. 14 is a perspective view of the die unit 3. The die unit 3 caulks the front member SE and the back member BE.

The die unit 3 is attached to the cover 1c as illustrated in FIGS. 12 and 13. Specifically, a scanner unit 1n is provided on the cover 1c, and the base plate 3p of the die unit 3 is attached on the scanner unit 1n. The scanner unit 1n is provided in a left region on the cover 1c, and a space 310 is present between the cover 1c and the base plate 3p in a right region on the cover 1c.

The die unit 3 includes the base plate 3p placed on the cover 1c via the scanner unit 1n and a plurality of connection members 1s connecting the base plate 3p and the cover 1c. One or a plurality of connection members 1s are provided on each of the front side, the rear side, the left side, and the right side. The base plate 3p and the cover 1c are connected by the connection member 1s. As described above, since the space 310 is present between the cover 1c and the base plate 3p in the right region on the cover 1c, the connection member 1s on the right side, which is some of the plurality of connection members 1s, supports the base plate 3p above the cover 1c. As described above, some of the plurality of connection members 1s have a function of connecting the base plate 3p and the cover 1c, and the remaining connection members 1s have a function of supporting the base plate 3p above the cover 1c.

The die unit 3 includes the lower mold 30, the lower mold 31, the lower mold moving motor 140, the rotation support table 32, the upper mold 33, the upper die lifting motor 34, a first gear 35, a second gear 36, a pair of rotary cams 37, and a support plate 38, as illustrated in FIG. 14.

The die unit 3 includes the lower mold 30 that supports the front member SE and the lower mold 31 that supports the back member BE as a plurality of molds arranged along a circumferential direction with respect to a rotary shaft. The lower mold 30 and the lower mold 31 are formed in a circular shape in a plan view. The lower mold 30 and the lower mold 31 face each other with a center of the rotation support table 32 as a reference, and are supported by the rotation support table 32 via springs 30s, respectively. In an initial stage, the lower mold 30 is disposed in front of the lower mold 31. The rotation support table 32 has a substantially circular shape in a plan view. A gear 32a is provided on a side peripheral surface of the rotation support table 32 parallel to an axial direction. The lower mold moving motor 140 is provided on a lateral side of the rotation support table 32. A gear 131 is connected to a rotary shaft of the lower mold moving motor 140. The gear 131 is engaged with the gear 32a of the rotation support table 32. Accordingly, when the lower mold moving motor 140 is rotationally driven, a driving force thereof is transmitted to the rotation support table 32 via the gears 131 and 32a. Therefore, the rotation support table 32 rotates around the up-down direction Dz. By rotating the rotation support table 32 in this way, each of the lower mold 30 and the lower mold 31 is displaced between the first mold position and the second mold position facing the first mold position in the front-rear direction Dx. The first mold position is a position where the front member SE or the back member BE is loaded. The second mold position is a position at which the front member SE held by the upper mold 33 is bonded to the back member BE loaded and supported by the lower mold 31. When the lower mold 30 is at the first mold position, the lower mold 30 receives the front member SE from the front member feed unit 4. On the other hand, when the lower mold 31 is at the first mold position, the lower mold 31 receives the back member BE from the back member feed unit 5.

The support plate 38 is erected on the lateral side of the rotation support table 32. The upper die lifting motor 34 for raising and lowering the upper mold 33 is disposed on the support plate 38. A third gear (not illustrated) is connected to a rotary shaft of the upper die lifting motor 34. The third gear is engaged with the first gear 35. The first gear 35 is provided with a fourth gear (not illustrated) coaxially with the first gear 35. The fourth gear is engaged with the second gear 36. The pair of rotary cams 37 are connected to the second gear 36.

The support plate 38 is provided with a plate member 38a extending in the front-rear direction Dx toward above the lower mold 31. The upper mold 33 is located below the plate member 38a. The upper mold 33 includes an inner mold 33a and an annular outer mold 33b provided below the inner mold 33a coaxially with the inner mold 33a and having an inner diameter larger than an outer diameter of the inner mold 33a. The inner mold 33a is provided with a pair of pressed members 33c provided below the plate member 38a and extending in the left-right direction Dy. One rotary cam 37a of the pair of rotary cams 37 presses one of the pressed members 33c downward, and the other rotary cam 37b of the pair of rotary cams 37 presses the other pressed member 33c downward. In such a configuration, when the upper die lifting motor 34 is rotationally driven, a drive force thereof is transmitted to the second gear 36 via the third gear, the first gear 35, and the fourth gear. Accordingly, the second gear 36 rotates in a rotation direction Dr2, and the pair of rotary cams 37 also rotate in the rotation direction Dr2 accordingly. At this time, the rotary cam 37a pushes down one of the pressed members 33c, and the rotary cam 37b pushes down the other pressed member 33c, so that the inner mold 33a can be slid with respect to the outer mold 33b and lowered to the lower mold 30 or the lower mold 31. The upper die lifting motor 34 can be reversely rotated to raise the upper mold 33 to above the lower molds 30 and 31.

### (Button product)

FIG. 15 is a sectional view of the button product 200 manufactured by caulking the front member SE and the back member BE. As illustrated in FIG. 15, the front member SE is a member whose peripheral edge portion SEa protrudes downward, and the back member BE is a member whose peripheral edge portion BEa protrudes upward. The button product 200 is formed by caulking the front member SE separated and held by the upper mold 33, the connected portion Wb of the printing medium W, and the back member BE. The button product 200 is, for example, a button badge. In a state where a peripheral edge portion Fg of the connected portion Fb and a peripheral edge portion Wg of the connected portion Wb disposed on the front member SE are bent and clamped between the peripheral edge portion SEa and the peripheral edge portion BEa, the peripheral edge portion SEa and the peripheral edge portion BEa are caulked. Accordingly, the button product 200 is manufactured.

As described above, with the button product manufacturing device 100 according to the present embodiment, the die unit 3 is disposed on or above the printing unit 1, so that the installation area of the entire button product manufacturing device 100 can be reduced as compared with a case where the die unit 3 and the printing unit 1 are disposed side by side. Accordingly, the button product manufacturing device 100 can compacted in a planar direction.

In the present embodiment, a part of the conveying unit 2 is disposed in front of the printing unit 1. In this case, when a jam of the printing medium W or the like occurs in the conveying unit 2, it is easy to solve the jam. This contributes to implementation of a front operation in which the user performs work in front of the button product manufacturing device 100.

In the present embodiment, at least a part of the conveying unit 2 straddles the lateral side of the printing unit 1 and the lateral side of the die unit 3. That is, at least a part of the conveying unit 2 is disposed over the front of the printing unit 1 and the front of the die unit 3. By disposing at least a part of the conveying unit 2 so as to extend to the front of the printing unit 1 and the front of the die unit 3 in this way, it is possible to implement a configuration in which the die unit 3 is provided on the printing unit 1.

In the present embodiment, the conveying unit 2 is not disposed between the printing unit 1 and the die unit 3 in the conveying direction Dc1. That is, a part of the conveying unit 2 overlaps the printing unit 1 in the conveying direction Dc1. Accordingly, the space occupied by the conveying unit 2 and the printing unit 1 in the conveying direction Dc1 can be reduced. Since the conveying unit 2 is not disposed between the printing unit 1 and the die unit 3, the dimension of the button product manufacturing device 100 in the up-down direction Dz can be reduced. Thus, the button product manufacturing device 100 can be further compacted.

In the present embodiment, the installation area of the printing unit 1 is equal to or larger than the installation area of the die unit 3, that is, equal to or larger than the installation area of the base plate 3p of the die unit 3. Accordingly, the die unit 3 can be stably arranged with respect to the printing unit 1.

In the present embodiment, the height of the back member stocker 50 is higher than the height of the front member stocker 40. Accordingly, the back member BE having a larger dimension in the thickness direction than the front member SE due to provision of the safety pin 150 may be accommodated in the back member stocker 50 by the same number as the number of accommodated front member SE.

In the present embodiment, the die unit 3 is provided with the handle 3h to be gripped by the user. Accordingly, the user grips the handle 3h to easily rotate the cover 1c of the printing unit 1 from the close position Ph to the open position Pk or from the open position Pk to the close position Ph.

In the present embodiment, the die unit 3 is attached to the cover 1c. In this case, the die unit 3 can also be opened when the cover 1c is opened. That is, since the cover 1c is opened after the conveying unit 2 is detached from the die unit 3, the die unit 3 is opened as a result of the conveying unit 2 being detached when the cover 1c is opened, and thus the die unit 3 is easily accessed during maintenance of the die unit 3 or the like.

In the present embodiment, the base plate 3p and the cover 1c are connected by the connection member 1s. Accordingly, the die unit 3 can be firmly attached to the cover 1c.

In the present embodiment, some of the plurality of connection members 1s support the base plate 3p on or above the cover 1c. In this case, since the space 310 is present between the cover 1c and the base plate 3p in the right region on the cover 1c, the strength of the portion of the base plate 3p where the space 310 is present can be ensured by the connection member 1s.

In the present embodiment, the conveying unit 2 is detachably provided with respect to the die unit 3. Accordingly, after the conveying unit 2 is detached from the die unit 3, maintenance or the like of the conveying unit 2 is easily performed, and maintenance or the like of the die unit 3 is also easily performed.

In the present embodiment, the engaging portion 2k1 is engaged with the engaged portion 301, and the engaging portion 2k2 is engaged with the engaged portion 302. Accordingly, the support plates 20 and 22 can be easily connected to the base plate 3p.

In the present embodiment, the right end of one plate coupling shaft 24 among the plurality of plate coupling shafts 24 is connected to the engaging portion 2k1, and the left end of the plate coupling shaft 24, is connected to the engaging portion 2k2. Accordingly, the engaging portion 2k1 and the engaging portion 2k2 are connected by the plate coupling shaft 24, and thus the strength of the engaging portions 2k1 and 2k2 can be increased. Therefore, connection of the support plates 20 and 22 to the base plate 3p is stabilized in terms of strength.

In the present embodiment, the engaging portion 2k1 is engaged with the engaged portion 301 and the engaging portion 2k2 is engaged with the engaged portion 302 in a state where the positioning portions 2i1 and 2i2 abut against a predetermined portion of the base plate 3p. Accordingly, the support plates 20 and 22 can be connected to the base plate 3p in a state where the positions of the support plates 20 and 22 in the up-down direction with respect to the base plate 3p are positioned. In addition, the right end of the plate coupling shaft 24 is disposed at a position closer to the rear end of the positioning portion 2i1 than the lower end of the engaging portion 2k1, and the left end of the plate coupling shaft 24 is disposed at a position closer to the rear end of the positioning portion 2i2 than the lower end of the engaging portion 2k2. Accordingly, the right end of the plate coupling shaft 24 can be disposed at the center of the engaging portion 2k1, and the left end of the plate coupling shaft 24 can be disposed at the center of the engaging portion 2k2. Therefore, the strength of the engaging portions 2k1 and 2k2 may be further increased.

Further, in the present embodiment, the printing medium W printed by the printing unit 1 is discharged to the conveying unit 2 by the discharge unit 210. In this case, the relay of the conveyance of the printing medium W to the conveying unit 2 can be smoothly performed by the discharge unit 210.

### (Modifications)

The present invention is not limited to the above-described embodiment, and modifications can be adopted without departing from the gist of the present invention. For example, it is as follows.

In the above-described embodiment, the die unit 3 is disposed on the printing unit 1, but the present invention is not limited thereto. The die unit 3 may be disposed above the printing unit 1, and another component may be present between the printing unit 1 and the die unit 3 in the up-down direction Dz.

In the above-described embodiment, a part of the conveying unit 2 is disposed in front of the printing unit 1, but the present invention is not limited thereto. A part of the conveying unit 2 may be disposed on a lateral side of the printing unit 1, and a part of the conveying unit 2 may be disposed, for example, to the left, right, or rear of the printing unit 1.

In the above-described embodiment, the handle 3h to be gripped by the user is provided on the base plate 3p, but the present invention is not limited thereto, and for example, a hole may be provided in the base plate 3p, and the user may rotate the cover 1c to lift the cover 1c via the hole.

In the above-described embodiment, one or a plurality of rollers may be provided on the support portion 211 of the discharge unit 210.

In the above-described embodiment, each of the lower mold 30 and the lower mold 31 is displaced between the first mold position and the second mold position by rotating the rotation support table 32. However, the present invention is not limited thereto. It is also possible to adopt a slide mechanism that displaces each of the lower mold 30 and the lower mold 31 between the first mold position and the second mold position, for example, in a sliding manner.

In the above-described embodiment, the front member SE and the back member BE each have a circular shape in a plan view, but the present invention is not limited thereto, and the front member SE and the back member BE may have another shape such as an elliptical shape.

In the above-described embodiment, the connected portion Wb of the printing medium W has a circular shape in a plan view, but the present invention is not limited thereto, and the connected portion Wb may have another shape such as an elliptical shape.

In the above-described embodiment, a marker may be disposed in the remaining portion Wa of the printing medium W on one side in a direction D2 orthogonal to the direction D1 with a center in the direction D2 as a reference. Accordingly, when the user accommodates the printing medium W in the sheet holder of the printing unit 1, the front and back and the arrangement orientation of the printing medium W are less likely to be wrong.

### Reference Signs List

1: printing unit
1c: cover
1h: body
1s: connection member
2: conveying unit
2i1, 2i2: positioning portion
2k1, 2k2: engaging portion
3: die unit
3h: handle
3p: base plate
20, 22: support plate
24: plate coupling shaft
40: front member stocker
50: back member stocker
100: button product manufacturing device
200: button product
210: discharge unit
301, 302: engaged portion
BE: back member
Dcl: conveying direction
Ph: close position
Pk: open position
SE: front member
W: printing medium

## Claims

1. A button product manufacturing device that manufactures a button product by connecting a front member and a back member, the device comprising:
a printing unit configured to perform printing on a printing medium;
a die unit configured to connect the front member and the back member; and
a conveying unit configured to convey the printing medium on the front member or above the front member in a conveying direction from the printing unit toward the die unit, wherein
the die unit is disposed on or above the printing unit.

2. The button product manufacturing device according to claim **1,** wherein
at least a part of the conveying unit is disposed on a lateral side of the printing unit.

3. The button product manufacturing device according to claim 1, wherein
at least a part of the conveying unit straddles the lateral side of the printing unit and a lateral side of the die unit.

4. The button product manufacturing device according to claim 3, wherein
the conveying unit is not disposed between the printing unit and the die unit in the conveying direction.

5. The button product manufacturing device according to claim 1, wherein
an installation area of the printing unit is equal to or larger than an installation area of the die unit.

6. The button product manufacturing device according to claim **1,** further comprising:
a front member stocker configured to accommodate at least one of the front member in a state of being stacked in a height direction; and
a back member stocker configured to accommodate at least one of the back member in a state of being stacked in the height direction, wherein
a height of the back member stocker is higher than a height of the front member stocker.

7. The button product manufacturing device according to claim 1, wherein
the die unit includes a handle to be gripped by a user.

8. The button product manufacturing device according to claim **1,** wherein
the printing unit includes a body and a cover disposed above the body and rotatable between a close position where the body is closed and an open position where the body is opened, and
the die unit is configured to be attached to the cover.

9. The button product manufacturing device according to claim 8, wherein
the die unit includes a base plate placed on the cover and a plurality of connection members configured to connect the base plate and the cover.

10. The button product manufacturing device according to claim 9, wherein
a part of the plurality of connection members is configured to support the base plate on or above the cover.

11. The button product manufacturing device according to claim 10, wherein
the conveying unit is detachably provided with respect to the die unit, and
the cover is rotatable from the close position to the open position in a state where the conveying unit is detached from the die unit.

12. The button product manufacturing device according to claim **11,** wherein
the base plate includes an engaged portion, and the conveying unit includes an engaging portion configured to be engaged with the engaged portion.

13. The button product manufacturing device according to claim 12, wherein
the conveying unit includes a first support plate and a second support plate spaced apart from the first support plate in a predetermined direction orthogonal to the conveying direction,
the engaging portion includes a first engaging portion provided on the first support plate and a second engaging portion provided on the second support plate, and
the conveying unit further includes a plate coupling shaft extending in the predetermined direction, be connected to the first engaging portion, and be connected to the second engaging portion.

14. The button product manufacturing device according to claim 13, wherein
the first support plate has a first positioning portion for positioning in an up-down direction with respect to the base plate,
the second support plate has a second positioning portion for positioning in the up-down direction with respect to the base plate, and
one end of the plate coupling shaft is disposed at a position closer to the first positioning portion than the first engaging portion, and the other end of the plate coupling shaft is disposed at a position closer to the second positioning portion than the second engaging portion.

15. The button product manufacturing device according to claim **1,** further comprising:
a discharge unit configured to discharge the printing medium printed by the printing unit to the conveying unit.
